# EUROPEAN PATENT APPLICATION

(11) **EP 4 570 369 A1**
(43) Date of publication of application: **18.06.2025**
(21) Application number: 23216274.3
(22) Date of filing: 13.12.2023
(51) Int. Cl.: B01F 33/452, B01F 33/453, B01F 35/21, G01N 21/05

(54) **INDUCTIVE STIRRING SYSTEM FOR CHEMICAL ANALYSIS SYSTEM**

(71) Applicant: ABB SCHWEIZ AG, 5400 Baden (CH)
(72) Inventor: REDFERN, Adam, Gloucester, GL2 8NE (GB); DOE, William, Bristol, BS3 5BJ (GB); CARR, Benjamin, Gloucestershire, GL5 1ST (GB); LOVELESS, Edis, Bristol, BS5 0HP (GB)
(74) Representative: Maiwald GmbH

(57) **Abstract**

An inductive stirring system (100) for a chemical analysis system (200) comprising a magnetic stirring bar (110), which is configured to be arranged in a measuring cell (10) and rotatable about an axis of rotation for agitating a liquid to be detected in the measuring cell (10), and an inductor arrangement (120) that comprises a plurality of inductors (125) and configured to be arranged below the measuring cell (10). The plurality of inductors (125) of the inductor arrangement (120) are arranged axially around the axis of rotation of the magnetic stirring element (110) and are configured to generate a magnetic field for causing the magnetic stirring bar (110) to rotate about the axis of rotation in the measuring cell (10).

## Description

### FIELD OF INVENTION

The present disclosure relates to industrial process automation. In particular, the present disclosure relates to an inductive stirring system for a chemical analysis system, a measuring cell for an inductive stirring system, a chemical analysis system comprising an inductive stirring system for detecting a liquid to be detected in a measuring cell and the use of an inductive system in a chemical analysis system.

### BACKGROUND

In a chemical analysis system sample and reagents are dispensed into a measuring cell or a cuvette. To ensure that the absorption change is uniform throughout the reaction vessel the liquids must be suitably mixed. A common method to achieve this is to use a magnetic stir bar inside of the reaction vessel.

For example, a brushed DC motor with a permanent magnet affixed to the motor shaft may be used to couple with the stir bar to produce a rotation in the stir bar inside of the measuring cell. Limitations may lie in the high cost of the DC motor and the degradation of the motor brushes due to wear. Moreover, power consumption for this method may be relatively high due to the use of a brushed motor with an affixed spinning mass. If the device is not solid state, it may result in more failure modes and limited lifetime and results in a complicated mechanical arrangement.

Further, an inductive stirring system may be used to produce a magnetic field to cause the stirrer bar to rotate inside of the measuring cell. However, the inductors for this system are typically arranged radially. To achieve this arrangement, custom inductors and a specialized flexible PCB has been used, accompanied by the limitations of the high cost associated with the specialized parts, constraints applying to the mechanical design including the use of a large measuring cell, and the system not producing axial rotation of the stirrer bar. Power consumption for this method can be relatively high due to the arrangement of the inductors requiring a higher current to produce a sufficient magnetic field to cause the stirrer bar to rotate. The key issue with radially mounted inductors may be that the inductors may compete for space around the measuring cell with the optical measurement devices.

### SUMMARY

It may be seen as an objective of the invention to provide an improved chemical analysis system with a reduction in cost, size and complexity of stirring methodologies, while maintaining or even optimizing the accuracy and efficiency of the detecting and analyzing system.

The objective is achieved by the subject matter of the independent claims. The dependent claims, the following description and the drawings show embodiments of the invention.

According to a first aspect of the present, an inductive stirring system is provided for a chemical analysis system, which comprises a magnetic stirring bar and an inductor arrangement comprising a plurality of inductors. The magnetic stirring bar is configured to be arranged in a measuring cell and rotatable about an axis of rotation for agitating a liquid to be detected in the measuring cell, which the inductor arrangement is configured to be arranged below the measuring cell.

For example, two or more inductors may be provided and spaced axially around the desired axis of rotation. A measuring cell area of the measuring cell or measuring cell that is to be mixed may be placed above the inductors.

The plurality of inductors of the inductor arrangement are arranged axially around the axis of the rotation of the magnetic stirring element. Further, the plurality of inductors are configured to generate a magnetic field for causing the magnetic stirring bar to rotate about the axis of rotation in the measuring cell.

Each of the plurality of inductors may be designed to be a coil or wire wound a magnetic core for generating a magnetic field, when an electric current may pass through the coil which may interact or couple with the magnetic stirring bar in the liquid to be detected, inducing a motion of rotation for stirring or agitating the liquid to be detected. Each of the plurality of inductors may be designed to be cylinder-shaped and comprise a longitudinal axis extending along the height of the inductor.

The plurality of inductors, for example the three inductors, of the inductor arrangement are arranged axially around the axis of rotation of the magnetic stirring element. In case that two inductors are provided, the inductors may be arranged symmetrically about the axis of the rotation of the magnetic stirring system.

By axially arranging the inductors, the longitudinal axis of each inductor is arranged to be in parallel to the axis of the rotation of the magnetic stirring bar. By contrast, in a conventional electromagnetic stirring system, the three inductors may be arranged radially around the axis of rotation of the magnetic stirring bar, so that the longitudinal axis of the inductor may be arranged to be perpendicular to the axis of the rotation of the magnetic stirring bar.

The key issue with radially mounted inductors may be that the inductors may compete for space around the measuring cell with the optical measurement devices.

By contrast, with the electromagnetic inductive stirring system, the inductors may be mounted axially around the desired centre or axis of rotation of the magnetic stirring bar. The system may utilise off the shelf inductors and produce a smooth rotation around the centre point of the inductor arrangement. This may advantageously reduce cost and complexity of the design, allow for a wider range of mechanical arrangements including a smaller measuring cell. The performance of the stirring motion may then be improved.

According to an embodiment, the inductor arrangement may further comprise a printed circuit board, on which the plurality of inductors are mounted axially around the axis of rotation of the magnetic stirring bar.

According to another embodiment, the plurality of inductors may be arranged spatially in a vicinity of one another and configured to cause the magnetic stirring bar into a smooth rotation and/or a substantially circular motion.

According to another embodiment, the magnetic stirring bar may comprise a cylindrical shape or an oval shape. Alternatively, the magnetic stirring bar may comprise a bearing neck.

According to another embodiment, the inductive stirring system may further comprise a control unit, which is configured to pass a current through the plurality of inductors, so that the plurality of inductors are configured to generate the magnetic field for causing the magnetic stirring bar to rotate.

According to another embodiment, the plurality of inductors may be configured to generate an alternating or rotating magnetic field for coupling with the magnetic stirring bar.

A current passes through the inductors, producing a changing magnetic field which may then couple with the magnetic stirrer bar inside of the measuring cell. This may produce a stirring effect inside of the measuring cell, subsequently mixing the various fluids inside of the measuring cell together.

According to another embodiment, the control circuit may be configured to sequentially power the plurality of the inductors in a clockwise direction or in a counterclockwise direction.

For example, each inductor may be powered sequentially in either in a clockwise or counter-clockwise to produce a changing magnetic field that is changing position around the centre point or rotation axis of the axially mounted inductors. The inductors shall be spaced as close to each other as possible to allow for a smooth rotation of the stirrer bar.

In the chemical analysis system, the inductors may be mounted directly to a PCB (printed circuit board) situated under the inductors. This may free up space for the optical measurement devices to be arranged radially around the measuring cell.

According to another embodiment, the control circuit may be configured to alternately activate a driving mode for driving the magnetic stirring bar into a motion of rotation or a sensing mode for detecting the motion of rotation of the magnet stirring bar.

As a common control circuit, the control circuit may be configured to switch between the driving mode and the sensing mode, for example, in a predefined time interval or manually, in order to activate the inductors for inducing the rotation of the magnetic stirring bar and to determine or measure the induced rotation of the magnetic stirring bar.

According to another embodiment, the measuring cell may be configured to be filled with the liquid to be detected. The liquid to be detected may be a sample liquid, a reagent liquid and/or a mixture liquid of the sample liquid and the reagent liquid.

The fluid may be, but not limited to, a pressurized fluid from a pipe or tank, a bottle of fluid at atmospheric pressure.

For example, an optical measurement cell may consist of a volume through which light is transmitted and detected, a number of fluid connection ports, with the magnetic stirring bar situated in the bottom. The liquid sample may be allowed to flow through the measuring cell, valves are then closed, reagents introduced, mixed, and an optical measurement taken. During the liquid flow phase, it may be possible for the stirring bar to be pushed out of the bottom of the cell due to a high sample flow and block the outlet port, thus preventing the cell from being properly flushed, resulting in an incorrect measurement being taken by the instrument or the chemical analysis system.

According to a second aspect, a measuring cell is provided for an inductive stirring system of the present disclosure for a chemical analysis system, which comprises a magnetic stirring bar that is arrangeable inside the measuring cell. The measuring cell comprises an outlet, which is arranged in a top region of the measuring cell, and an annular element, which is connected to the outlet. The annular element is configured to allow a liquid to be detected being flushed out from the outlet after flowing through the measuring cell, when the magnetic stirring bar is lifted in the liquid to be detected to the vicinity of the outlet in the top region of the measuring cell.

The magnetic stirring bar may be lifted to the top or upper region of the liquid to be detected and/or an inner volume of the measuring cell, for example, due to the flow rate through the measurement cell. Thus, the magnetic stirring bar may be lifted into a position whereby it may block the outlet port, preventing adequate flushing of the cell, resulting in incorrect or inaccurate optical measurement being taken.

By introducing an annular region in the top of the measuring cell from within the outlet port may be connected, the stirring bar may not fully block the annulus when the stirring bar is washed, for example, towards the outlet cell. The blockage risk may be mitigated.

According to an embodiment, the annular element may be arranged at the same height in the measuring cell as the outlet.

According to another embodiment, the annular element may be designed to be a chamfered structure that may be arranged at a plug closure for the measuring cell. Alternatively or additionally, the annular element may be designed to be a stepped structure, which may be arranged at the plug closure and/or at an inner wall of the measuring cell in the top region of the measuring cell. Alternatively or additionally, the annular element may be designed to be a recess that may be arranged at the plug closure and/or at the inner wall of the measuring cell in the top region.

For example, a chamfer may be preferably provided at the top plug closure of the measuring cell due to the simplicity of a machining process. The annular region of the annular element may be created into which the outlet port of the measuring cell may be connected to form a channel or opening for allowing the liquid to be flushed out from the inside to the outside of the measuring cell, even if the magnetic stirring barr is lifted, for example, due to the flow rate through the measuring cell in the liquid towards the top region, in particular the vicinity of the outlet port of the measuring cell.

The positioning of the annular element or the annular feature at the same height in the measuring cell as the outlet port may result in that the magnetic stirring bar, which may be lifted towards the outlet part, may not result in a full or partial blockage of the outlet port. This may lead to the adequate flushing of the measuring cell, and thus correct or accurate optical measurement being taken.

According to another embodiment, the measuring cell may further comprise a first inner section and a second inner section. The first inner section may be configured to be filled with the liquid to be detected and to allow a detector arrangement of the chemical analysis system detecting the liquid to be detected. The second inner section may be arranged at a bottom of the measuring cell and configured to allow the magnetic stirring bar fitting in the second inner section.

In other words, the first inner section may be arranged in the top or upper region of the measuring cell, while the second inner section may be arranged at the bottom or lower region of the measuring cell.

The second inner section may comprise a smaller diameter than the first inner section. Alternatively, the second inner section may comprise a same diameter than the first inner section.

When the magnetic stirring bar is induced and driven into a motion of rotation for agitating or stirring the liquid to be detected, it may be desired to keep the stirring bar within the bottom region of the measuring cell, so that the magnetic stirring bar may not block the detection or chemical analysis within a detecting volume in the first inner section along a path of detection. Typically the magnetic stirring bar may sit in the bottom of the measuring cell.

It may be desired to constitute a reduced diameter region of the measurement cell specifically for the stirring bar to reside within. The benefit of this is that it may allow a reduced volume measurement cell to be achieved without affecting the part of the measurement cell through which the optical measurement is taken.

In order to introduce a reduced diameter cylinder of the measuring cell within which the stir bar may reside, the cylinder may comprise a substantially reduced diameter when compared to the 'useful' diameter of the main part in the top region of the measuring cell. The second inner section as "stir bar cylinder' and the first inner section as 'measurement cylinder' section may be designed to be concentric, in order to ensure that the magnetic stirring bar may not become trapped on the shelf resulting from a stepped-cylinder design. However, in principle, concentricity is not required.

According to a third aspect, a chemical analysis system is provided comprising an inductive stirring system of the present disclosure for detecting a liquid to be detected in a measuring cell. The chemical analysis system comprises a detector arrangement, which is arranged laterally at the measuring cell of the present disclosure and configured to detect a liquid to be detected in the measuring cell.

According to a third aspect, the use of an inductive stirring system is provided in a chemical analysis system.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1: shows schematically an example of an inductive stirring system for a chemical analysis system according to the present disclosure;
- Fig. 2: shows schematically a top view of an example of an inductive stirring system according to the present disclosure;
- Fig. 3: shows schematically a top view and a side view of an inductor arrangement according to the present disclosure;
- Fig. 4: shows schematically a top view and a side view of an inductor arrangement as prior art;
- Fig. 5: shows schematically an example of a circuit construction of a chemical analysis system according to the present disclosure;
- Fig. 6a: shows schematically an example of a measuring cell according to the present disclosure;
- Fig. 6b: shows schematically an example of a measuring cell according to the present disclosure;
- Fig. 7 a) to d): shows schematically, respectively, an arrangement of an annular element for a measuring cell according to the present disclosure;
- Fig. 8 a) to c): shows schematically, respectively, a side view and a top view of a measuring cell according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

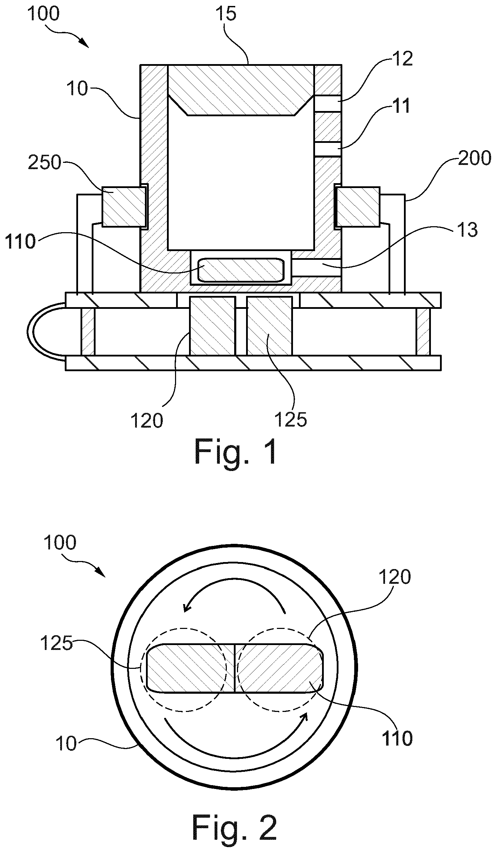

Fig. 1 shows schematically an example of an inductive stirring system 100 for a chemical analysis system 200.

The inductive stirring system 100 comprises a magnetic stirring bar 110 and an inductor arrangement 120 that comprises a plurality of inductors 125. The magnetic stirring bar 110 is arranged inside a measuring cell 10 and may be rotated about an axis of rotation for agitating a liquid to be detected in the measuring cell 10. The inductor arrangement 120, in particular the plurality of inductors 125, may be arranged below the measuring cell 10.

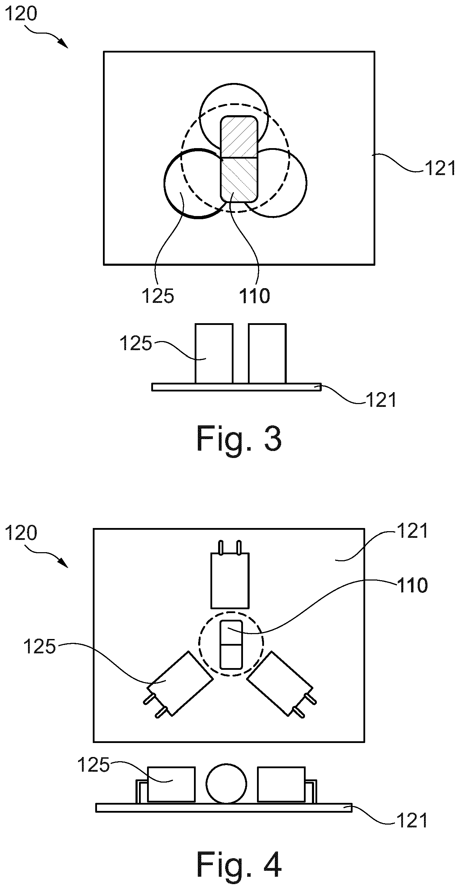

As shown in Fig. 2 and Fig. 3, the plurality of inductors 125 may comprise two or three individual inductors. Each inductor 125 may be designed to be a coil or wire wound a magnetic core for generating a magnetic field, when an electric current may pass through the coil which may interact or couple with the magnetic stirring bar 110 in the liquid to be detected, inducing a motion of rotation for stirring or agitating the liquid to be detected. Each of the plurality of inductors 125 is Fig. 2 and Fig. 3 may be designed to be cylinder-shaped and comprise a longitudinal axis extending along the height of the inductor 125.

The plurality of inductors 125, for example the three inductors 125 as shown in the top view of Fig. 3, of the inductor arrangement 120 are arranged axially around the axis of rotation of the magnetic stirring element. In case that two inductors 125 are provided, as shown in Fig. 2, the inductors are arranged symmetrically about the axis of the rotation of the magnetic stirring system 100.

By axially arranging the inductors 125 in Fig. 2 and Fig. 3, the longitudinal axis of each inductor is arranged to be in parallel to the axis of the rotation of the magnetic stirring bar 110. By contrast, in a conventional electromagnetic stirring system, as shown in Fig. 4, the three inductors 125 may be arranged radially around the axis of rotation of the magnetic stirring bar 110, so that the longitudinal axis of the inductor 125 may be perpendicular to the axis of the rotation of the magnetic stirring bar 110.

Fig. 1 shows that, the inductor arrangement 120 may further comprise a printed circuit board or a PCB board 121, on which the plurality of inductors 125 are mounted axially around the axis of rotation of the magnetic stirring bar 110. In order to achieve the radial arrangement of Fig. 4, it may be of importance to provide with custom inductors 125 and/or a specialized flexible printed circuit board, as these inductors 125 may compete for space around the measuring cell 10 with the detector arrangement 250, which may comprise optical detection or measurement devices, of the chemical analysis system.

Compared to the inductors of Fig. 4 being radially arranged, the inductors 125 of Fig. 1 to Fig. 3 being arranged axially around the axis of the rotation may address the above spatial limitation with a more compact construction of the inductor arrangement 120, since the spacing between the axially arranged inductors 125 may be significantly reduced. Advantageously, this may further result in a less off-centre movement of the magnetic stirring bar 110. A further benefit of the axial arrangement of the inductors 125 may be to reduce wear on the magnetic stirring bar and/or the internal bore of the measuring cell 10. Overall, the stirring motion of the magnetic stirring bar 110 may thus be smoother and configured to the liquid to be detected in the measuring cell 10 more precisely and efficiently.

The plurality of inductors 125 may be configured to generate a magnetic field for causing the magnetic stirring bar 110 to rotate about the axis of rotation in the measuring cell 10. In particular, the plurality of inductors 125 may be arranged spatially in a vicinity of one another and configured to cause or generate the magnetic stirring bar 110 into a smooth rotation and/or a substantially circular motion.

The axial arrangement may allow the plurality of inductors 125 to be mounted closer to each other and/or to the magnetic stirring bar 110 when compared to the radial arrangement of Fig. 4. This in turn may result in a lower current requirement in order to spin the magnetic stirring bar 110.

As off the shelf components, for example for the inductors 115, may be commonly available for the inductor arrangement 120 and mounted onto a standard rigid printed circuit board 121, the inductive stirring system 100 of Fig. 1 to Fig. 3 may allow for a wider range of mechanical arrangements to be used including, but not limited to, a smaller volume of the measuring cell 10, the position of the magnetic stirring bar 110 in the measuring cell 10 as the reaction vessel, and/or the distance from the inductive stirring system 100.

The magnetic stirring bar 110 in Fig. 1 to Fig. 3 may comprise a cylindrical shape. Alternatively, the magnetic stirring bar 110 may comprise an oval shape or a bearing neck.

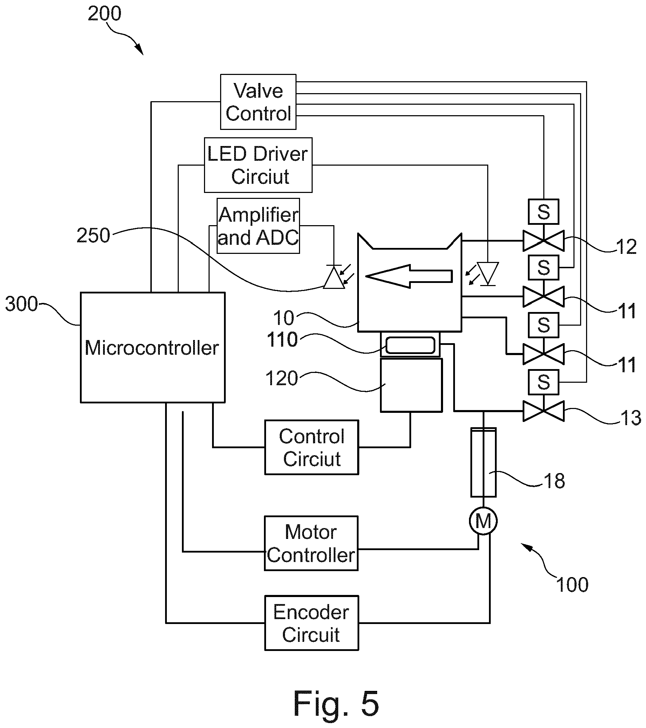

Fig. 5 shows that a circuit construction of a chemical analysis system 200, in which the inductive stirring system 100 may comprise a control unit 300. The control unit 300 may be electrically connected to the inductor arrangement 120 and configured to pass a current through the plurality of inductors 125, so that the plurality of inductors 125 may be configured to generate the magnetic field for causing the magnetic stirring bar 110 into a motion of rotation. In order to induce the motion of rotation of the magnetic stirring bar 110 for agitating the fluid to be detected, the plurality of inductors 125 may be configured to generate an alternating magnetic field for coupling with the magnetic stirring bar 110.

For example, the control circuit 300 may be configured to sequentially power or energize the plurality of the inductors 125 in a clockwise direction or, as shown in Fig. 2, in a counterclockwise direction. Alternatively, the control circuit 300 may be configured to sequentially power the plurality of the inductors and to alter a sequence direction between a clockwise direction and a counterclockwise direction to allow the plurality of the inductors 125 generating the alternating magnetic field.

A microcontroller 350 may be provided for the chemical analysis system 200, which may be connected to the control circuit to control the inductor arrangement 120 and connected to a detector arrangement 250 for performing the chemical analysis in the measuring cell 10. Further, the microcontroller 350 may be connected to a plurality of valves 11a, 12a, 13a which may be configured to control the flow to flow into or out from the measuring cell 10 via a plurality of openings 11, 12, 13 that are provided as inlets or outlets at the wall of the measuring cell 10. Additionally, in order to control the flow for the chemical analysis system 200, the microcontroller 350 may further be connected to a pump 18 as a driving unit for the flow, for example via a motor controller and/or an encoder circuit.

The measuring cell 10 in Fig. 10 may be a measuring cell or a flow cell having a rectangular or cylindrical shape. The measuring cell 10 may be configured to be filled with the liquid to be detected, which may be a sample liquid, a reagent liquid and/or a mixture liquid of the sample liquid and the reagent liquid. The liquid to be detected may be, but not limited to, a pressurized liquid from a pipe or tank, a bottle of a liquid at atmospheric pressure.

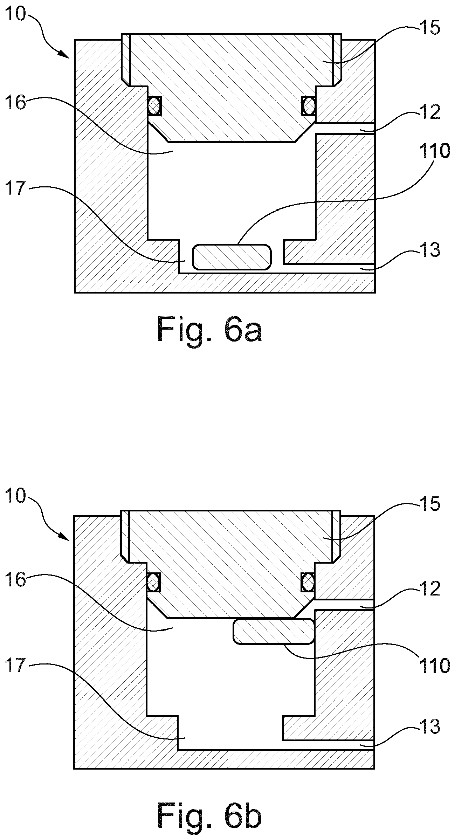

As shown in Fig. 6a and Fig. 6b, the measuring cell 10 comprises an outlet 12, which may be arranged in a top or upper region of the measuring cell 10. Additionally, the measuring cell 10 may comprise an inlet 13 being arranged in the bottom or lower region of the measuring cell 10 to deliver a liquid to be detected, which may be a sample liquid or a reagent liquid or a mixture of the sample liquid and the reagent liquid.

The magnetic stirring bar 110 may be arranged, respectively, at the bottom or in the bottom region of the measuring cell 10, as shown in Fig. 6a, or lifted by the liquid inside the inner volume of the measuring cell 10 to the vicinity of the outlet 12 in the top region of the cell 10.

The measuring cell 10 comprises an annular element 1211, which may be connected to the outlet 12. Further, the annular element 1211 may be arranged at the same height in the measuring cell 10 as the outlet, so that the annular element 1211 may form together with the outlet 12 an opening or channel that may connect the inner volume of the measuring cell 10 with the outside. As such, the annular element 1211 may be configured to allow the liquid to be detected being flushed out from the outlet, even when the magnetic stirring bar 110 is lifted to the vicinity of the outlet 12, and even when the opening of the measuring cell 10 may be closed or covered by a plug closure 15. In other words, the annular element 1211 may be designed to prevent the liquid in the measuring cell 10 from being blocked to flow outwards via the outlet 12.

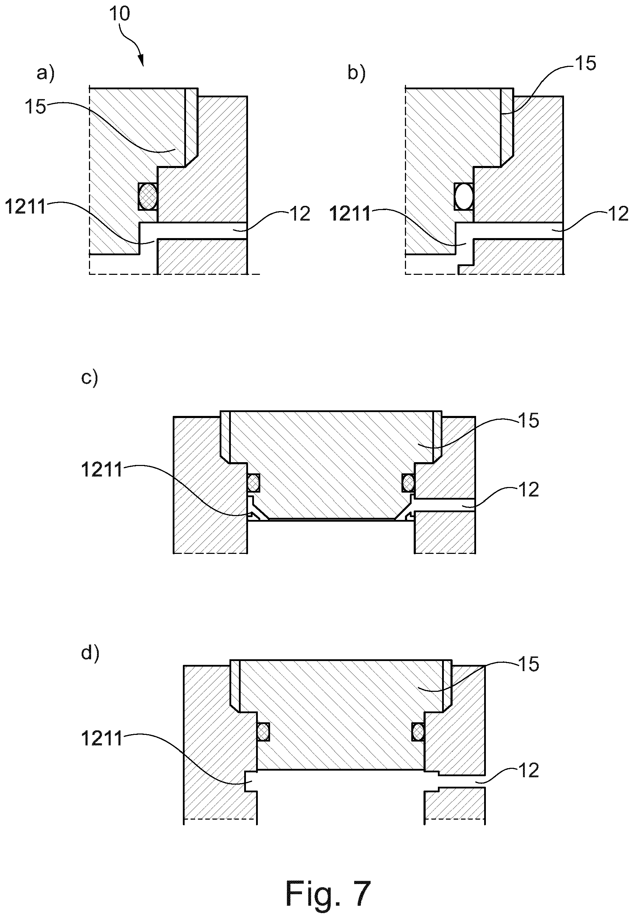

Fig. 7 a) to d) show, respectively, various forms or shapes of the annular element 1211 in connection with the outlet 12. For example, the annular element 1211 may be designed to be a stepped structure, which is arranged at the plug closure 15, as shown in Fig. 7 b). Alternatively, the annular element 1211 may be designed to be a recess that may be arranged at the plug closure 15, as shown in Fig. 7a) or at the inner wall of the measuring cell 10 in the top region, as shown in Fig. 7d). Also, the annular element 1211 may be designed to be a chamfered structure, as shown in Fig. 7c), which may be arranged at the plug closure 15. Additionally, Fig. 7c) shows further that a stopper element may be additionally provided at the chamfered structure.

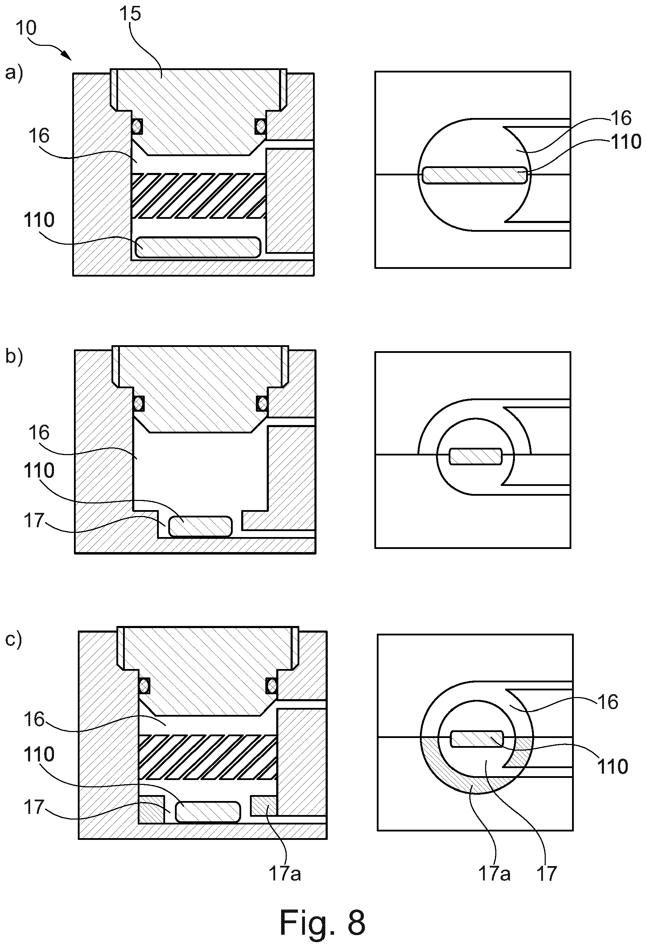

As in Fig. 6a, the measuring cell 10 in Fig. 8 a) to c) show, respectively, in a side view and a top view that the measuring cell 10 may further comprise a first inner section 16 in the top and/or middle region, which may be configured to be filled with the liquid to be detected and to allow a detector arrangement 250 of the chemical analysis system 200 detecting the liquated to be detected in the cell 10, and a second inner section 17, which is arranged at the bottom region of the measuring cell 10 and configured to allow the magnetic stirring bar 110 fitting in the second inner section 17.

When the magnetic stirring bar 110 is induced and driven into a motion of rotation for agitating or stirring the liquid to be detected, it may be desired to keep the stirring bar 110 within the bottom region of the measuring cell 10, so that the magnetic stirring bar 100 may not block the detection or chemical analysis within a detecting volume 16a in the first inner section 16 along a path of detection.

Fig. 8a) show that the second inner section 17 may comprise the same diameter as the first inner section, in which a magnetic stirring bar may comprise a size allowing the liquid to be detected being sufficiently stirred.

The detecting volume 16a may only be a small portion of the measuring cell 10 that may be regarded as useful, in which the optical path may be directed through it. The diameter of the cylinder of the measuring cell 10 at this point may need to be as large as possible, as a longer optical path through the liquid to be detected within the measuring cell 10 may result in a more accurate and more sensitive detection system. However, it may be desired that the magnetic stirring bar 110 may comprise a reduced size, in particular a reduced length, without affecting its stirring effect the diameter, and that a total volume of the measuring cell 10 may be designed to be minimized, resulting in a reduced reagent consumption that is directly proportional to the cell volume, especially when, for example, the reduced reagent consumption is preferable as the reagent may be expensive, costly to ship and may require man power to replace.

Alternatively, in Fig. 8b) and Fig. 8c) the second inner section 17 may comprise a smaller diameter than the first section 16, so that the magnetic stirring bar may be further reduced in the length, which may be found to have no significant impact on the ability of it to effectively mix, stir or agitate the liquid volume. The saved liquid consumption 17a in Fig. 8c) may result from the only reduced diameter of the second inner section 17 of the measuring cell 10 containing the magnetic stirring bar 110. As such, the volume of the measuring cell 10 may be reduced without impacting the useful detecting volume 16a and/or the optical path length.

In Fig. 8b) and Fig. 8c), the second inner section 17 as a "stir bar cylinder' and the first inner section 16 as a 'measurement cylinder' section may be designed to be concentric, in order to ensure that the magnetic stirring bar 110 may not become trapped on the shelf resulting from a stepped-cylinder design of the measuring cell 10.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 10: measuring cell
- 11: inlet/opening
- 12: outlet/opening
- 13: inlet/opening
- 11a: valve for inlet/opening
- 12a: valve for outlet/opening
- 13a: valve for inlet/opening
- 15: plug closure
- 16: first inner section
- 16a: detecting volume
- 17: second inner section
- 17a: saved volume
- 18: pump
- 100: inductive stirring system
- 110: magnetic stirring bar
- 120: inductor arrangement
- 121: printed circuit board
- 1211: annular element
- 125: inductor
- 200: chemical analysis system
- 250: detector arrangement
- 300: control unit
- 350: microcontroller

## Claims

1. Inductive stirring system (100) for a chemical analysis system (200), comprising:
a magnetic stirring bar (110), configured to be arranged in a measuring cell (10) and rotatable about an axis of rotation for agitating a liquid to be detected in the measuring cell (10);
an inductor arrangement (120) comprising a plurality of inductors (125), configured to be arranged below the measuring cell (10);
wherein the plurality of inductors (125) of the inductor arrangement (120) are arranged axially around the axis of rotation of the magnetic stirring element (110);
wherein the plurality of inductors (125) are configured to generate a magnetic field for causing the magnetic stirring bar (110) to rotate about the axis of rotation in the measuring cell (10).

2. The inductive stirring system (100) according to claim 1,
wherein the inductor arrangement (120) further comprises a printed circuit board (121), on which the plurality of inductors (125) are mounted axially around the axis of rotation of the magnetic stirring bar (110).

3. The inductive stirring system (100) according to claim 1 or 2,
wherein the plurality of inductors (125) are arranged spatially in a vicinity of one another and configured to cause the magnetic stirring bar (110) into a smooth rotation and/or a substantially circular motion.

4. The inductive stirring system (100) according to one of the preceding claims,
wherein the magnetic stirring bar (110) comprises a cylindrical shape or an oval shape, or comprises a bearing neck .

5. The inductive stirring system (100) according to one of the preceding claims, further comprising:
a control unit (300);
wherein the control circuit (300) is configured to pass a current through the plurality of inductors (125), so that the plurality of inductors (125) are configured to generate the magnetic field for causing the magnetic stirring bar (110) to rotate.

6. The inductive stirring system (100) according to one of the preceding claims,
wherein the plurality of inductors (125) are configured to generate an alternating or rotating magnetic field for coupling with the magnetic stirring bar (110).

7. The inductive stirring system (100) according to claim 5 or 6,
wherein the control circuit (300) is configured to sequentially power the plurality of the inductors (125) in a clockwise direction or in a counterclockwise direction.

8. The inductive stirring system (100) according to one of the preceding claims 5 to 7,
wherein the control circuit (300) is configured to alternately activate a driving mode for driving the magnetic stirring bar into a motion of rotation or a sensing mode for detecting the motion of rotation of the magnet stirring bar.

9. The inductive stirring system (100) according to one of the preceding claims,
wherein the measuring cell (10) is configured to be filled with the liquid to be detected;
wherein the liquid to be detected is a sample liquid, a reagent liquid and/or a mixture liquid of the sample liquid and the reagent liquid.

10. Measuring cell (10) for an inductive stirring system (100) according to one of the preceding claims 1 to 9 for a chemical analysis system (200), wherein the inductive stirring system (100) comprises a magnetic stirring bar (110) being arrangeable inside the measuring cell (10), comprising:
an outlet (12), arranged in a top region of the measuring cell (10);
an annular element (1211), connected to the outlet (12);
the annular element (1211) is configured to allow a liquid to be detected being flushed out from the outlet (12) after flowing through the measuring cell (10), when the magnetic stirring bar (110) is lifted to the vicinity of the outlet (12) in the top region of the measuring cell (10).

11. The measuring cell (10) according to claim 10,
wherein the annular element (1211) is arranged at the same height in the measuring cell (10) as the outlet (12).

12. The measuring cell (10) according to claim 10 or 11,
wherein the annular element (1211) is designed to be a chamfered structure, arranged at a plug closure (15) for the measuring cell (10), and/or a stepped structure, arranged at the plug closure (15) and/or at an inner wall of the measuring cell (10) in the top region, and/or a recess, arranged at the plug closure (15) and/or at the inner wall of the measuring cell (10) in the top region.

13. The measuring cell (10) according to one of the preceding claims 10 to 12, further comprising:
a first inner section (16), which is configured to be filled with the liquid to be detected and to allow a detector arrangement (250) of the chemical analysis system (200) detecting the liquid to be detected;
a second inner section (17), arranged at a bottom of the measuring cell (10) and configured to allow the magnetic stirring bar (110) fitting in the second inner section (17);
wherein the second inner section (17) comprises a smaller diameter than the first inner section (16).

14. Chemical analysis system (200) comprising an inductive stirring system (100) according to one of the preceding claims 1 to 9 for detecting a liquid to be detected in a measuring cell (10) according to one of the preceding claims 10 to 13, comprising:
a detector arrangement (250), arranged laterally at the measuring cell (10) and configured to detect a liquid to be detected in the measuring cell (10).

15. Use of an inductive stirring system (100) according to one of the claims 1 to 9 in a chemical analysis system (20) according to claim 14.
